# EUROPEAN PATENT APPLICATION

(11) **EP 4 715 025 A1**
(43) Date of publication of application: **25.03.2026**
(21) Application number: 25203644.7
(22) Date of filing: 22.09.2025
(51) Int. Cl.: C09K 11/02, C09K 11/80

(54) **WAVELENGTH CONVERSION MEMBER**

(30) Priority: 24.09.2024 JP 2024165283
(71) Applicant: NICHIA CORPORATION, Tokushima 774-8601 (JP)
(72) Inventor: KUNIMUNE, Teppei, Anan-shi, Tokushima, 774-8601 (JP); AMIYA, Toshimasa, Anan-shi, Tokushima, 774-8601 (JP)
(74) Representative: Vossius & Partner Patentanwälte Rechtsanwälte mbB

(57) **Abstract**

A wavelength conversion member includes a substrate having light reflectivity, and a phosphor layer disposed on the substrate and including phosphor particles, oxide particles adhering to the phosphor particles, and a covering film containing silicon oxide and covering the phosphor particles and the oxide particles. A material of the oxide particles differs from a material of the covering film, and an extinction coefficient of the covering film is less than 1.0 × 10⁻⁵.

## Description

### TECHNICAL FIELD

The embodiment relates to a wavelength conversion member.

### BACKGROUND

Phosphor components may be fabricated by using an atomic layer deposition (ALD) method. For example, Japanese Patent Publication No. 2013-247067 describes that a powder phosphor containing oxide particles is coated on a phosphor plate having transmissivity by a covering layer such as an ALD layer or a sol-gel layer. Japanese Patent Publication No. 2016-100485 describes that, with oxide particles and a covering layer being formed of the same oxide material, a difference in refractive index therebetween is reduced, thereby preventing unnecessary scattering. Further, Japanese Patent Publication No. 2016-100485 describes that, with the oxide particles and the covering layer being formed of the same oxide material, the same thermal expansion coefficient is obtained, thereby effectively preventing the oxide particles and the covering layer from peeling and the like. However, when a wavelength conversion member is created by the method described above, there is room for improvement in an extraction efficiency of light extracted from the wavelength conversion member when light is incident thereon.

### SUMMARY

An object of an embodiment of the present disclosure is to provide a wavelength conversion member having improved light extraction efficiency.

A wavelength conversion member according to an embodiment of the present disclosure includes a substrate having light reflectivity, and a phosphor layer disposed on the substrate and including phosphor particles, oxide particles adhering to the phosphor particles, and a covering film containing silicon oxide and covering the phosphor particles and the oxide particles. A material of the oxide particles differs from a material of the covering film. An extinction coefficient of the covering film is less than 1.0 × 10⁻⁵.

According to certain embodiments of the present disclosure, it is possible to provide a wavelength conversion member having improved light extraction efficiency.

### BRIEF DESCRIPTION OF DRAWINGS

FIG. 1 is a schematic, enlarged sectional view showing a configuration of a wavelength conversion member according to an embodiment of the present disclosure.
FIG. 2 is a schematic cross-sectional view for describing an area ratio between a region where phosphor particles are present and a region where the phosphor particles are absent.
FIG. 3 is a schematic upper view for describing the area ratio between the region where the phosphor particles are present and the region where the phosphor particles are absent.
FIG. 4 shows an approximate line of Cx for determining a light extraction efficiency.
FIG. 5 shows an approximate line of Cy for determining the light extraction efficiency.
FIG. 6 shows conditions and results of a First Example, a Second Example, and a First Comparative Example.
FIG. 7 shows photographs of wavelength conversion members of the First Example and the First Comparative Example before and after irradiation with blue laser light.
FIG. 8 is a photograph of the wavelength conversion member of the First Example when irradiated with blue light from a planar light source.
FIG. 9 is a photograph of the wavelength conversion member of the Second Example when irradiated with blue light from the planar light source.

### DETAILED DESCRIPTION

Embodiments of the present invention are described below with reference to the drawings. Note that the drawings are schematic and conceptual and are exaggerated and simplified as appropriate. Further, even for the same constituent elements, dimensional ratios, positional relationships, numbers, and the like may not strictly match between the drawings. As a cross-sectional view, an end view illustrating only a cut surface may be illustrated.

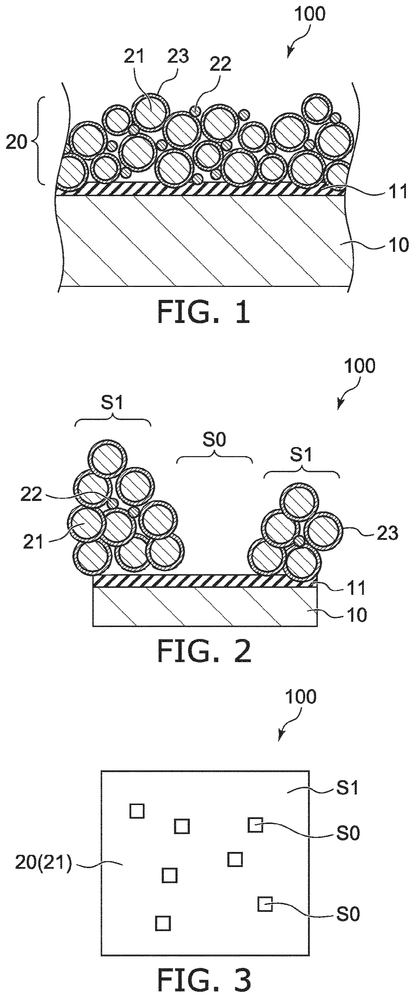

FIG. 1 is a schematic, enlarged sectional view for describing a configuration of a wavelength conversion member 100 according to an embodiment. As illustrated in FIG. 1, the wavelength conversion member 100 according to the embodiment includes a substrate 10, a reflective film 11, and a phosphor layer 20.

The substrate 10 has light reflectivity and heat dissipation properties. Examples of a material of the substrate 10 include metals such as gold, silver, copper, iron, nickel, chromium, aluminum, titanium, tantalum, tungsten, cobalt, ruthenium, tin, zinc, and lead, and alloys thereof (for example, an aluminum alloy such as an alloy of aluminum, copper, silver, and a platinum group metal such as platinum).

The reflective film 11 is a member that is provided between the substrate 10 and the phosphor layer 20 and reflects light incident from the phosphor layer 20 side. As the reflective film 11, a single layer formed of a metal, a multilayer film formed of a metal, or a multilayer film (dielectric multilayer film) formed by layering a plurality of dielectrics of two or more types may be used. As the dielectric multilayer film, a distributed Bragg reflector (DBR) film, for example, may be used. Among these, preferably a film including a dielectric multilayer film is used as the reflective film 11. With a dielectric multilayer film, light can be efficiently reflected.

Examples of the material of the reflective film 11 include metals such as gold, silver, copper, iron, nickel, chromium, aluminum, titanium, tantalum, tungsten, cobalt, ruthenium, tin, zinc, and lead, and alloys thereof (for example, an aluminum alloy such as an alloy of aluminum and copper, silver, or a platinum group metal such as platinum).

Further, examples of the dielectric used as the reflective film 11 include an oxide or a nitride containing at least one type of element selected from the group consisting of silicon (Si), titanium (Ti), zirconium (Zr), niobium (Nb), tantalum (Ta), and aluminum (Al).

The thickness of the reflective film 11 is, for example, in a range from about 0.1 µm to several tens of µm, preferably in a range from about 0.1 µm to 10 µm, and more preferably in a range from about 0.3 µm to 7 µm.

As illustrated in FIG. 1, the phosphor layer 20 is disposed on the substrate 10 or the reflective film 11, and includes phosphor particles 21, oxide particles 22, and a covering film 23.

The phosphor particles 21 are excited by incident light and emit light having a wavelength longer than that of the incident light.

Examples of the phosphor particles 21 include one or two or more selected from an yttrium aluminum garnet (YAG)-based phosphor activated with cerium as an activator, a nitrogen-containing calcium aluminosilicate (CaO-Al₂O₃-SiO₂) phosphor activated with europium and/or chromium as an activator, a CASN-based phosphor, a SCASN-based phosphor, a silicate ((Sr, Ba)₂SiO₄) phosphor, an α-sialon phosphor, and a β-sialon phosphor.

As the phosphor particles 21, preferably materials having relatively high heat resistance and less degradation from excitation light are used. Examples of suitable materials include YAG-based phosphors, LAG-based phosphors, CASN-based phosphors, and SCASN-based phosphors. The YAG-based phosphors include, for example, those in which at least part of Y is replaced with Tb or at least part of Y is replaced with Lu. Further, the YAG-based phosphors may also include Gd, Ga, or the like in their composition. A preferable composition of the phosphor particles 21 is (Y, Gd, Lu)₃(Al, Ga)₅O₁₂: Ce.

The total thickness of the phosphor layer 20 is preferably 30 to 50 µm. With such a configuration, a light extraction efficiency can be improved.

The oxide particles 22 adhere to the phosphor particles 21 and bond the phosphor particles 21 to each other after firing. Further, the oxide particles 22 contain at least one selected from the group consisting of Al₂O₃, ZrO₂, HfO₂, TiO₂, ZnO, Ta₂O₅, Nb₂O₅, In₂O₃, and SnO₂.

As the oxide particles 22, preferably a material having a thermal expansion coefficient close to that of the phosphor particles 21 or a material having low light absorption is used. An example of a suitable material is aluminum oxide.

The covering film 23 covers the phosphor particles 21 and the oxide particles 22. Further, the covering film 23 covers each of the phosphor particles 21. The oxide particles 22 are disposed in the covering film 23. Further, the covering film 23 contains silicon oxide. Examples of the silicon oxide include SiO₂ and SiO_{1.5}. As a covering film formation method, the covering film 23 containing SiO₂ or the like need only be formed on the phosphor particles 21 and the oxide particles 22 disposed on the substrate 10 or the reflective film 11 by an ALD device. Note that, after the film formation, the covering film 23 is firmly fixed to the substrate 10 together with the phosphor particles 21 and the oxide particles 22.

The material of the covering film 23 differs from the material of the oxide particles 22. In a case in which the material of the covering film 23 is silicon oxide, the material of the oxide particles 22 is a material other than silicon oxide.

Further, an extinction coefficient of the covering film 23 in the visible light region is less than 1.0 × 10⁻⁵. An extinction coefficient refers to an imaginary part of a complex refractive index in the visible light region, and can be measured using a spectroscopic ellipsometer (for example, VASE: manufactured by J.A. Woollam Co.).

A method of manufacturing the wavelength conversion member 100 according to the present embodiment will now be described. First, the substrate 10 having light reflectivity is provided. The substrate 10 used is as described above.

A resin, a solvent, the oxide particles 22, and the phosphor particles 21 are mixed to provide a printing resin. The oxide particles 22 and the phosphor particles 21 used are as described above. Examples of the resin used include ethyl cellulose, an epoxy resin, a silicone resin, and an acrylic resin. The acrylic resin readily decomposes and is volatilized at a low temperature, and is thus preferred. Further, examples of the solvent used include butyl carbitol acetate and terpineol. Solvents having a boiling point of 150°C or higher are less likely to be volatilized during the process, and are therefore preferred.

The printing resin described above is print-coated onto the substrate 10 described above by using a printing mask. Then, the printing resin is dried to volatilize the solvent. Further, the printing resin is heated to decompose and volatilize the resin. Further, ozone cleaning is performed to fully remove the resin that slightly remains. At this time, weak bonding occurs between the substrate 10 and the phosphor particles 21 as well as between the phosphor particles 21 through the oxide particles 22.

Subsequently, a covering film containing SiO₂ or the like is formed using an ALD device, and the covering film 23 is firmly fixed to the substrate 10 together with the phosphor particles 21 and the oxide particles 22. In this way, the wavelength conversion member 100 according to the embodiment is obtained.

The light extraction efficiency will now be described. Blue laser light is emitted from the phosphor layer 20 side of the wavelength conversion member 100 according to the embodiment, and light such as white light, for example, including light excited by the phosphor particles 21 or the like and having a wavelength longer than that of the incident light is extracted. In such a case, the white light includes the mixture of the light scattered from the blue light of the laser and the light emitted by the phosphor layer 20 absorbing the blue light, as well as the light reflected by the reflector 11. The efficiency is calculated by lm/W, given W as a radiant flux of the incident blue laser light and lm as a flux of the detected white light after reflection. That is, the extraction efficiency is the amount of white light that can be extracted from the blue laser in lumens.

According to the wavelength conversion member 100 according to the embodiment, the configuration described above is provided, making it possible to improve the extraction efficiency of white light when light is incident.

In such a case, the diameter of the phosphor particles 21 is 18 µm or less, preferably 11 µm or less, and more preferably 5 µm or less. With such a configuration, the phosphor particles can be densely and uniformly provided on the substrate, increasing the scattering of light from the wavelength conversion member 100 and thus making it possible to further improve the light extraction efficiency.

Further, the concentration of the activator contained in the phosphor particles 21 is preferably 5 mol% or less. The activator is, for example, cerium. With such a configuration, the amount of cerium as an activator is small relative to that of the phosphor particles 21, and the amount of phosphor particles 21 is large relative to that of the activator, resulting in an increase in the scattering amount of light, making it possible to further improve the light extraction efficiency.

FIG. 2 is a schematic cross-sectional view for describing an area ratio between a region where the phosphor particles 21 are present and a region where the phosphor particles 21 are absent. FIG. 3 is a schematic upper view for describing the area ratio between the region where the phosphor particles 21 are present and the region where the phosphor particles 21 are absent. After formation of the ALD film, as illustrated in FIGS. 2 and 3, a region where the phosphor particles 21 are present and a region where the phosphor particles 21 are absent exist. In this situation, blue light is emitted from above the wavelength conversion member 100 by a planar light source, a chromaticity profile is acquired by an imaging luminance meter (ProMetric (trade name)), and relative chromaticity Cx data is extracted and analyzed using a line profile. Then, the relative chromaticity Cx of the region where the phosphor particles 21 are absent is corrected to zero, an area of a region where the relative chromaticity Cx is 85% or less of a maximum relative chromaticity Cx of the phosphor particles 21 region is defined as SO, and an area of a region where the relative chromaticity Cx exceeds 85% of the maximum relative chromaticity Cx of the phosphor particle region is defined as S1.

That is, as illustrated in FIG. 3, in a top view, given S1 as the area of the region where the phosphor particles 21 are present in the phosphor layer 20 and S0 as the area of the region where the phosphor particles 21 are absent, a value obtained by dividing S0 by (S0 + S1) is preferably 0.05 or less. With such a configuration, the scattering of light from the wavelength conversion member 100 increases, making it possible to further improve the light extraction efficiency. Note that a void area ratio is the value obtained by dividing S0 by (S0 + S1) described above.

The wavelength conversion member 100 according to the embodiment will be specifically described hereinafter using examples. However, the wavelength conversion member 100 according to the embodiment is not limited to these examples.

### First Example

First, a substrate formed of copper having reflectivity was provided. Then, a DBR film was formed on the substrate. Further, a printing resin was provided by mixing an acrylic resin (KC-1300 manufactured by Kyoeisha Chemical Co., Ltd.), terpineol as a solvent, nano-alumina particles (Alu C) as oxide particles, and YAG-based phosphor particles. At this time, the added amount of Ce (cerium) as an activator contained in the phosphor was 0.09 mol. The compositional weight ratio of the phosphor particles in the printing resin was 130. Further, phosphor particles having a diameter of 18 µm were used. Note that the diameter of the phosphor particles was measured by a laser diffraction method. The concentration of the nano-alumina particles in the printing resin was 0.77 wt%.

The substrate was print-coated with the printing resin through a printing mask. Then, the substrate was dried in an oven at 150°C for 0.5 hours and further dried at 180°C for 0.5 hours to volatilize the solvent. Further, the acrylic resin was decomposed and volatilized by firing in an oven at 250°C for 10 hours. Then, ozone cleaning was performed to completely remove any remaining traces of the acrylic resin. The Ce concentration contained in the phosphor particles at this time was 3 mol%.

Subsequently, SiO₂ was formed as a covering film at 200°C by using an ALD device. At this time, the thickness of the film formed by ALD was 0.1 µm. Thus, the wavelength conversion member of the First Example was obtained.

### Second Example

In the Second Example, the added amount of Ce as an activator contained in the phosphor was 0.03 mol. The compositional weight ratio of the phosphor particles in the printing resin was 350. Phosphor particles having a diameter of 11 µm were used. The concentration of the nano-alumina particles in the printing resin was 1.10 wt%. Other conditions were the same as or similar to those in the First Example. Thus, the wavelength conversion member of the Second Example was obtained.

### First Comparative Example

The compositional weight ratio of the phosphor particles in the printing resin was 100. The concentration of the nano-alumina particles in the printing resin was 0.68 wt%. Further, Al₂O₃ was deposited as the covering film at 100°C using an ALD device. In the First Comparative Example, the material of the oxide particles was the same as the material of the covering film. Other conditions were the same as or similar to those in the First Example. Thus, the wavelength conversion member of the First Comparative Example was obtained.

The extinction coefficient, light extraction efficiency as an initial characteristic, blackening evaluation, and void area ratio of the wavelength conversion members obtained in the First Example, the Second Example, and the First Comparative Example were measured.

The extinction coefficient was measured for the covering film with a spectroscopic ellipsometer.

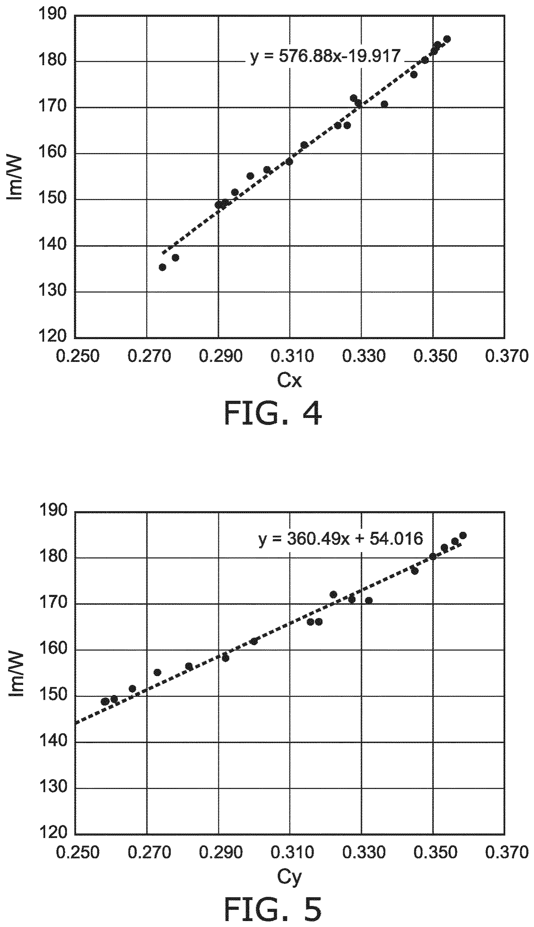

The light extraction efficiency was measured as follows. FIG. 4 shows an approximate line of Cx for determining the light extraction efficiency. FIG. 5 shows an approximate line of Cy for determining the light extraction efficiency. The light extraction efficiency (lm/W) was calculated using a relative chromaticity Cx of 0.316 and a relative chromaticity Cy of 0.318, and the approximate lines for lm/W against Cx and Cy were obtained by changing the thickness of the phosphor. Then, the relative chromaticity Cx and the relative chromaticity Cy obtained by actual measurement were fitted to the approximate lines, and the efficiency was calculated from the average value of lm/W for the relative chromaticity Cx and the relative chromaticity Cy.

The blackening evaluation was performed by irradiating the obtained wavelength conversion member with blue laser light at an output density of 16.5 W/mm² to confirm the presence or absence of blackening.

The void area ratio was obtained by irradiating the wavelength conversion member with blue light from above using a planar light source, acquiring a chromaticity profile using an imaging luminance meter (ProMetric), extracting the relative chromaticity Cx data, and analyzing the relative chromaticity Cx data with a line profile. Then, the relative chromaticity Cx of the region where the phosphor particles were absent was corrected to zero, the area of the region where the relative chromaticity Cx was 85% or less of the maximum relative chromaticity Cx of the phosphor particle region was defined as SO, the area of the region where the relative chromaticity Cx exceeded 85% of the maximum relative chromaticity Cx of the phosphor particle region was defined as S1, and the value (%) obtained by dividing S0 by (S0 + S1) was calculated.

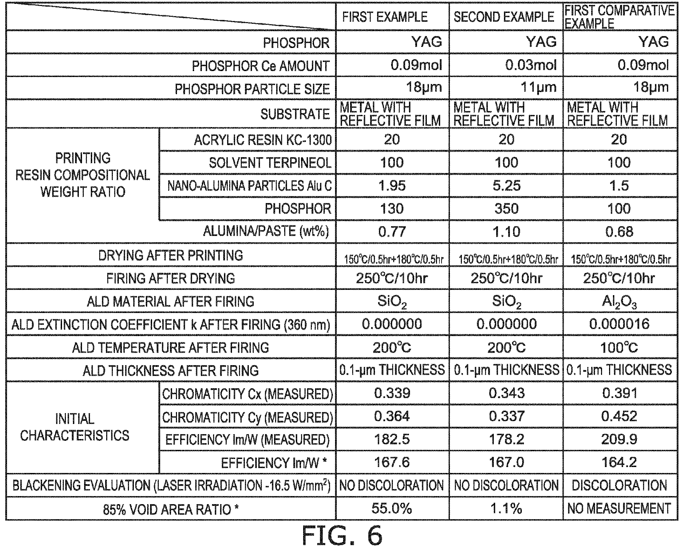

FIG. 6 shows the conditions and the results of the First Example, the Second Example, and the First Comparative Example obtained as described above. As shown in FIG. 6, the extinction coefficients of the wavelength conversion members of the First Example and the Second Example were less than 1.0 × 10⁻⁵, which was less than a detection limit value of 0.000001. On the other hand, the extinction coefficient of the First Comparative Example was 1.0 × 10⁻⁵ or greater, which was 0.000016 higher than those of the First Example and the Second Example.

As described above, the light extraction efficiencies of the wavelength conversion members of the First Example and the Second Example were 167.6 Im/W and 167.0 lm/W, respectively. On the other hand, the light extraction efficiency of the wavelength conversion member of the First Comparative Example was 164.2 lm/W. Thus, the light extraction efficiencies of the First Example and the Second Example were higher than the light extraction efficiency of the First Comparative Example. Accordingly, the wavelength conversion members of the First Example and the Second Example achieved an improvement in light extraction efficiency. This is presumably because the oxide particles are formed of a material different from that of the covering film, increasing the scattering of the light. Further, this is presumably because the extinction coefficient of the covering film SiO₂ of the First Example is less than 1.0 × 10⁻⁵. Further, this is presumably because the concentrations of the nano-alumina particles in the printing resins of the First Example and the Second Example are higher than the concentration of the nano-alumina particles in the printing resin of the First Comparative Example.

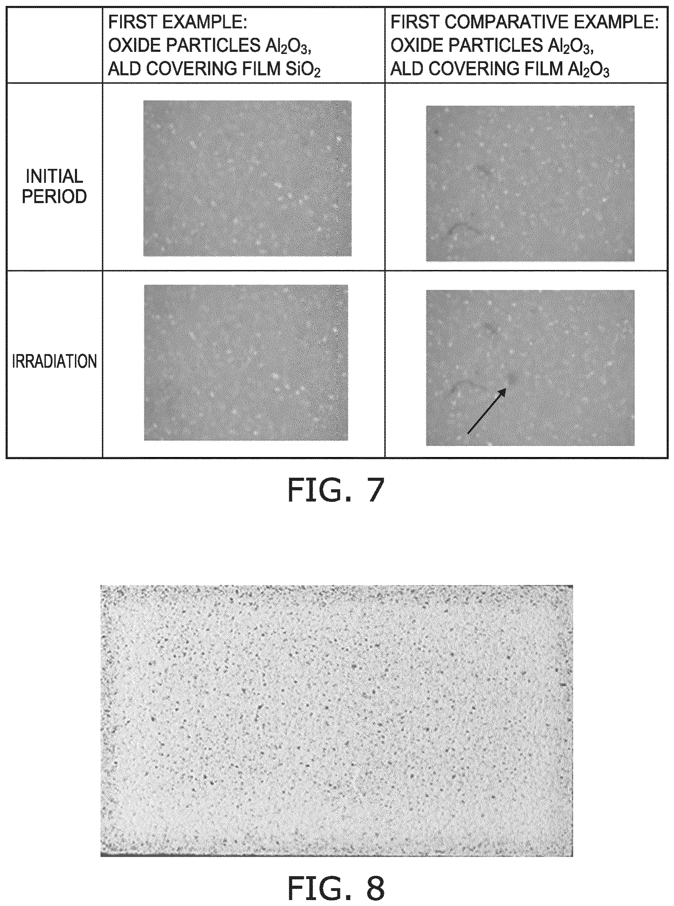

FIG. 7 shows photographs of the wavelength conversion members of the First Example and the First Comparative Example before and after irradiation with the blue laser light. In the wavelength conversion member of the First Example, as shown in FIG. 7, blackening did not occur even when the wavelength conversion member was irradiated with the blue laser light. On the other hand, in the wavelength conversion member of the First Comparative Example, as shown in FIG. 7, when the wavelength conversion member was irradiated with the blue laser light, blackening (locations indicated by arrows in the drawing) occurred. Thus, the wavelength conversion member of the First Example achieved suppression of the occurrence of blackening when irradiated with the blue laser light. This is presumably because, in the First Example, with the oxide particles being Al₂O₃ and the covering film being SiO₂, the oxide particles and the covering film were formed of different materials and, in the First Comparative Example, with the oxide particles being Al₂O₃ and the covering film being Al₂O₃, the oxide particles and the covering film were formed of the same material. Further, this is presumably because the extinction coefficient of SiO₂ is less than 1.0 × 10⁻⁵. Further, in the temperature evaluation, in the wavelength conversion member of the First Example, peeling of the phosphor layer from the substrate did not occur.

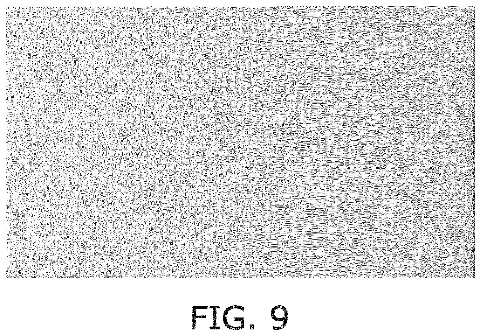

FIG. 8 is a photograph of the wavelength conversion member of the First Example when irradiated with blue light from the planar light source. FIG. 9 is a photograph of the wavelength conversion member of the Second Example when irradiated with blue light from the planar light source. In the wavelength conversion member of the First Example, the void area ratio was 55%, a favorable value. Note that black dots in FIG. 8 are regions where the relative chromaticity Cx is 85% or less, and the other regions are regions where the relative chromaticity Cx exceeds 85%. Further, in the wavelength conversion member of the Second Example, the void area ratio was 1.1%, a more favorable value. This is presumably because the phosphor particles of the Second Example are smaller than the phosphor particles of the First Example, making it possible to densely and uniformly provide the phosphor particles on the substrate.

As described above, according to the wavelength conversion member according to the embodiment, an improvement in light extraction efficiency was achieved.

Further, the oxide particles contain at least one selected from the group consisting of Al₂O₃, ZrO₂, HfO₂, TiO₂, ZnO, Ta₂O₅, Nb₂O₅, In₂O₃, and SnO₂, making it possible to make the material of the oxide particles different from the material of the covering film and improve the light extraction efficiency.

The diameter of the phosphor particles is defined as 5 µm or less, making it possible to densely and uniformly provide the phosphor particles on the substrate, increasing the scattering of light from the wavelength conversion member, and thus facilitating further improvement of the light extraction efficiency.

The concentration of the activator contained in the phosphor particles is defined as 5 mol% or less, decreasing the amount of the activator relative to that of the phosphor particles while increasing the amount of the phosphor particles relative to that of the activator, and thus facilitating further improvement of the light extraction efficiency.

According to certain embodiments of the present disclosure, the composition of the phosphor particles is (Y, Gd, Lu)₃(Al, Ga)₅O₁₂: Ce and the activator is Ce, making it possible to further improve the light extraction efficiency.

In a top view, given S1 as the area of the region where the phosphor particles are present in the phosphor layer and S0 as the area of the region where the phosphor particles are absent, the value obtained by dividing S0 by (S0 + S1) is defined as 0.05 or less, increasing the scattering of light from the wavelength conversion member and thus facilitating further improvement of the light extraction efficiency.

A reflective film that reflects light between the substrate and the phosphor layer can further be provided, making it possible to efficiently reflect the light and further improve the light extraction efficiency.

Each of the above-described embodiments and modified examples is an example embodying the present invention, and the present invention is not limited to these embodiments and modified examples. For example, in each of the above-described embodiments and modified examples, those in which some of the components or steps are added, omitted, or changed are also included in the present invention. The above-described embodiments and modified examples can be implemented in combination with each other.

## Claims

1. A wavelength conversion member comprising:
a substrate having light reflectivity; and
a phosphor layer disposed on the substrate and comprising
phosphor particles,
oxide particles adhering to the phosphor particles, and
a covering film containing silicon oxide and covering the phosphor particles and the oxide particles, wherein
a material of the oxide particles differs from a material of the covering film, and
an extinction coefficient of the covering film is less than 1.0 × 10⁻⁵.

2. The wavelength conversion member according to claim 1, wherein
the oxide particles comprise at least one selected from the group consisting of Al₂O₃, ZrO₂, HfO₂, TiO₂, ZnO, Ta₂O₅, Nb₂O₅, In₂O₃, and SnO₂.

3. The wavelength conversion member according to claim 1, wherein
the phosphor particles have a diameter that is 5 µm or less.

4. The wavelength conversion member according to claim 1, wherein
the phosphor particles contain an activator in an amount of 5 mol% or less.

5. The wavelength conversion member according to claim 4, wherein
the phosphor particles has a composition represented by (Y, Gd, Lu)₃(Al, Ga)₅O₁₂: Ce, and
the activator is Ce.

6. The wavelength conversion member according to claim 4, wherein
a ratio of S0 to (S0 + S1) is 0.05 or less, where, in the phosphor layer in a top view, S1 is an area of a region where the phosphor particles are present and S0 is an area of a region where the phosphor particles are absent.

7. The wavelength conversion member according to claim 1, further comprising:
a reflective film configured to reflect light between the substrate and the phosphor layer.

8. The wavelength conversion member according to claim 2, wherein
the phosphor particles have a diameter that is 5 µm or less.

9. The wavelength conversion member according to claim 2, wherein
the phosphor particles contain an activator in an amount of 5 mol% or less.

10. The wavelength conversion member according to claim 9, wherein
the phosphor particles has a composition represented by (Y, Gd, Lu)₃(Al, Ga)₅O₁₂: Ce, and
the activator is Ce.

11. The wavelength conversion member according to claim 9, wherein
a ratio of S0 to (S0 + S1) is 0.05 or less, where, in the phosphor layer in a top view, S1 is an area of a region where the phosphor particles are present and S0 is an area of a region where the phosphor particles are absent.

12. The wavelength conversion member according to claim 2, further comprising:
a reflective film configured to reflect light between the substrate and the phosphor layer.
